# DEMANDE DE BREVET EUROPEEN

(11) **EP 2 582 113 A1**
(43) Date de publication de la demande: **17.04.2013**
(21) Numéro de dépôt: 11306324.2
(22) Date de dépôt: 13.10.2011
(51) Int. Cl.: H04L 29/06, G07C 9/00, H04B 5/00

(54) **Dispositif d'adaptation entre un lecteur sans contact et un dispositif radiofréquence**

(71) Demandeur: Gemalto SA, 92190 Meudon (FR)
(72) Inventeur: Thill, Michel M., 92190 MEUDON (FR); Muller, Marc, 92190 MEUDON (FR); Spyropoulos, Evangelos, 92190 MEUDON (FR)

(57) **Abrégé**

L'invention se rapporte à un dispositif de transposition de communication qui comporte une interface 25 de communication par couplage capacitif, une interface 23 de communication radiofréquence et une interface 22 NFC couplées à une unité de traitement 27. Un premier couplage est créé entre le dispositif utilisateur et le dispositif de transposition via les interfaces 25 et 23 pour transférer de données d'authentification dans le dispositif de transposition. Un deuxième couplage est ensuite créé avec un appareil de contrôle via l'interface 22 pour que l'unité de traitement 27 exécute une transaction en utilisant les données d'authentification.

## Description

L'invention se rapporte à un dispositif d'adaptation entre un lecteur sans contact et un dispositif radio fréquence.

Les dispositifs de contrôle d'accès sans contact sont de plus en plus nombreux pour simplifier l'opération de contrôle à l'utilisateur. Ainsi, il est courant d'avoir recours dans les transports en commun à une vérification de type sans contact utilisant par exemple le standard ISO14443 ou un standard similaire. Typiquement, ce type de standard de communication utilise un lecteur émettant un champ électromagnétique qui permet d'alimenter et de communiquer avec un dispositif portatif. Le dispositif portatif est constitué d'un support en plastique ou en carton qui supporte une puce et une antenne. L'antenne se comporte également comme un demi-transformateur qui permet de récupérer suffisamment d'énergie pour alimenter la puce.

Par ailleurs, la puce comporte des informations d'authentification permettant au lecteur de vérifier l'authenticité du dispositif et également de vérifier si le dispositif est bien autorisé. Lors de l'alimentation du dispositif portable par le lecteur une communication est réalisée entre le lecteur et le dispositif portable pour vérifier les informations du dispositif portable et autoriser ou non l'accès d'une porte ou d'un portique auquel le lecteur est associé. Ce type de transaction s'effectue en quelques centièmes de seconde et permet de contrôler l'accès.

Les titres de transport ainsi obtenu peuvent être dématérialisés. Ainsi, il est également connu d'utiliser sont téléphone portable pour effectuer ce type de transaction. Le téléphone comporte alors une antenne permettant de communiquer avec le lecteur et les informations d'accès sont stockées dans un élément sécurisé similaire à une puce d'un dispositif portable.

Il est également connu, notamment par le brevet EP1695296, d'utiliser des dispositifs personnels d'authentification fortement sécurisé et ayant une utilisation transparente pour l'utilisateur. Ces dispositifs d'authentification se présentent sous la forme d'un objet porté par l'utilisateur, tel que par exemple un bracelet, auquel l'utilisateur s'authentifie de manière forte, par exemple par biométrie. L'authentification de l'utilisateur perdure tant que l'objet reste en contact avec l'utilisateur. L'utilisation de ces dispositifs personnels d'authentification se fait par un simple contact de l'utilisateur avec une zone de contact d'un lecteur adéquat. Par le contact, une communication par couplage capacitif permet d'échanger des clefs permettant de réaliser une communication radio cryptée. La communication radio cryptée permet de réaliser des transactions relativement complexes tout en permettant d'avoir un très haut niveau de sécurité.

Les dispositifs personnels d'authentification sont peu utilisés actuellement et il convient de trouver des solutions pour permettre leur utilisation sur des infrastructures existantes sans que cela ne nécessite de gros investissements pour transformer le réseau actuel. En particulier, il est préféré d'avoir une modification locale mineure sans avoir d'impact sur les infrastructures existantes. On préférera donc la solution la moins intrusive possible vis-à-vis du parc installé d'appareil de contrôle.

Selon l'invention, on rajoute un dispositif adaptateur sur un lecteur sans contact afin de le transformer à bas coût en un lecteur pour dispositif personnel d'authentification sans intervenir sur l'infrastructure globale. Ainsi, l'invention est un dispositif de transposition de communication qui comporte une première interface de communication de type à couplage capacitif, une deuxième interface de communication de type radiofréquence, une unité de traitement et de mémorisation et une troisième interface de communication de type sans contact. La première interface permet de réaliser une première communication pour échanger avec un dispositif utilisateur une information confidentielle. La deuxième interface permet d'établir une liaison de type radio fréquence cryptée avec le dispositif utilisateur en utilisant l'information confidentielle. L'une unité de traitement et de mémorisation permet de transférer via la deuxième interface des informations d'authentification contenues dans le dispositif utilisateur et destinées à un appareil de contrôle. La troisième interface de communication utilise un champ électromagnétique fourni par un appareil de contrôle pour communiquer les informations d'authentification préalablement reçues du dispositif utilisateur.

Ce dispositif adaptateur permet de récupérer toutes les informations d'authentification à partir dispositif utilisateur avant de déclencher le démarrage de la session avec l'appareil de contrôle. Ainsi la transaction NFC peut s'effectuer de manière indépendante sans subir aucune contrainte temporelle liée à une simple traduction protocolaire de chaque message.

Préférentiellement, l'unité de traitement et de mémorisation peut effacer systématiquement les informations d'authentification après les avoir transmises via la troisième interface. Ledit dispositif peut être intégré dans un appareil de contrôle. La première interface peut établir une communication utilisant le corps humain comme conducteur. La deuxième interface peut être une interface de type radio fréquence à courte portée utilisant une modulation à large bande. La troisième interface peut être conforme au standard ISO14443.

Afin de supprimer tout problème d'alimentation, le dispositif peut comporter un circuit d'alimentation qui permet de récupérer de l'énergie à partir du champ électromagnétique afin de recharger une batterie qui sert à alimenter les première à troisième interfaces de communication et l'unité de traitement et de mémorisation.

Selon un autre aspect, l'invention est un procédé d'authentification entre un dispositif utilisateur utilisant une première communication par couplage capacitif pour lancer une communication radiofréquence cryptée et un appareil de contrôle d'accès de type sans contact utilisant un champ électromagnétique modulé. On utilise un dispositif de traduction comportant une première interface de communication de type à couplage capacitif, une deuxième interface de communication de type radiofréquence, une troisième interface de communication de type sans contact utilisant le champ électromagnétique fournit par l'appareil de contrôle, et une unité de traitement et de mémorisation. Le procédé comporte les étapes suivantes:
- réalisation d'une première communication pour échanger une information confidentielle entre le dispositif utilisateur et le dispositif de traduction;
- établissement d'une liaison de type radio fréquence cryptée entre le dispositif utilisateur et le dispositif de traduction en utilisant l'information confidentielle ;
- **transfert via la deuxième interface des** informations d'authentification contenues dans le dispositif utilisateur et destinées à un appareil de contrôle vers le dispositif de traduction ;
- à l'issue du transfert des informations d'authentification dans le dispositif de traduction, établissement d'une communication sans contact entre le dispositif traducteur et l'appareil de contrôle et **exécution d'une session en utilisant les informations** d'authentification préalablement reçues du dispositif du dispositif utilisateur.

Préférentiellement, l'unité de traitement et de mémorisation du dispositif de traduction peut effacer toutes les informations après les avoir transférées à l'appareil de contrôle. Le dispositif de traduction peut récupérer une partie de l'énergie du champ électromagnétique fournit par l'appareil de contrôle pour s'alimenter.

L'invention sera mieux comprise et d'autres particularités et avantage apparaîtront à la lecture de la description qui va suivre et à la vue des figures annexées parmi lesquelles:
- la figure 1 représente un exemple de mise en oeuvre de l'invention,
- la figure 2 montre un schéma fonctionnel de l'invention,
- La figure 3 illustre le **fonctionnement d'une communication** à travers le corps humain,
- la figure 4 illustre les différentes communications mises en oeuvre avec l'invention,
- la figure 5 montre une variante fonctionnelle de l'invention.

L'invention est ici décrite en relation avec un appareil de contrôle d'accès cependant l'homme du métier comprendra que tout appareil de contrôle au sens large est concerné. Par appareil de contrôle, il faut comprendre tout appareil ayant à authentifier un utilisateur. Par extension un appareil de paiement est ici assimilé à un appareil de contrôle.

Pour réaliser une transformation à bas coût, tout en étant le moins intrusif sur l'infrastructure existante, une première idée est d'interposer un traducteur protocolaire qui traduit chaque message d'un protocole vers un autre. Cela reviendrait à traduire chaque message échangé entre les protocoles NFC et UWB.

Cependant les protocoles NFC ont été conçus pour des transactions très brèves liées à l'utilisation de dispositif auto alimenté sur le champ du lecteur. Ce type de dispositif doit répondre très rapidement tant qu'il est dans le champ **du lecteur de manière quasi immobile pour la durée de** la transaction alors que le dispositif est en déplacement. A cet effet, les délais de réponse attendus par le lecteur sont tellement court qu'il n'est pas envisageable d'avoir recours à ce type de solution.

L'invention propose un dispositif de traduction visant à prendre la place du dispositif utilisateur pour effectuer la transaction après avoir reçu de celui-ci toutes les informations lui permettant de réaliser la transaction.

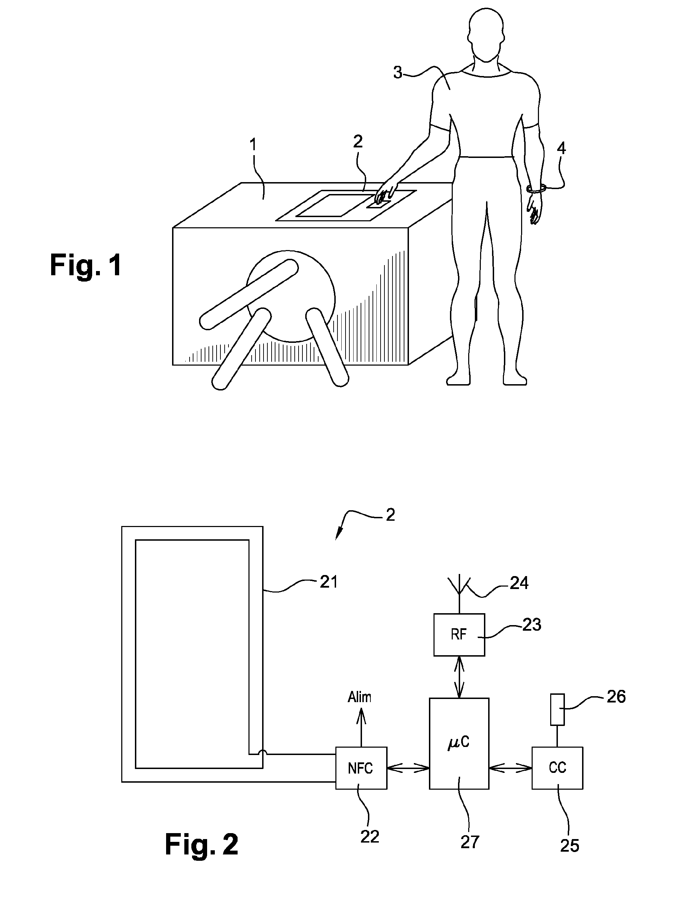

La figure 1 représente la mise en oeuvre de l'invention pour du contrôle d'accès à un réseau de transport. Un appareil de contrôle 1 est muni d'un dispositif de traduction 2 pour permettre à un utilisateur 3 de s'authentifier à l'aide d'un dispositif personnel d'authentification 4. L'appareil de contrôle 1 est d'un type à lecteur sans contact conforme à la norme ISO14443 disposant d'une antenne en forme de demi-transformateur produisant un champ électromagnétique. Ce type d'appareil de contrôle d'accès 1 est de plus en plus répandu à travers le monde et pour le rendre compatible avec l'invention il convient de rajouter un dispositif de traduction 2 entraînant le moins de modification possible de l'appareil 1.

Ainsi, le dispositif de traduction 2 est réalisé pour être une simple pièce rapportée su l'appareil de contrôle 1. Le dispositif de traduction 2 est détaillé fonctionnellement sur la figure 2. Le dispositif de contrôle comporte une première antenne 21 reliée à une interface sans contact 22. L'antenne 21 et l'interface 22 réalisent une interface sans contact connu également sous le nom d'interface NFC (de l'anglais Near Field Communication). **Ce type de communication utilise un champ** électromagnétique rayonnant de courte portée qui permet également d'alimenter un transpondeur communiquant avec le lecteur. Ce type d'interface est définit par exemple dans la norme ISO14443. L'antenne 21 formant un demi-transformateur, il est possible de récupérer une tension d'alimentation « Alim » par redressement et filtrage au niveau de l'interface 22 pour alimenter électriquement tous les autres éléments du dispositif de traduction 2.

Le dispositif de traduction 2 comporte également une interface radiofréquence 23 couplée à une antenne 24 ainsi qu'une interface de communication par couplage capacitif 25 disposant d'une électrode 26 destiné à être en contact avec l'utilisateur 3 du dispositif personnel d'authentification 4. L'interface radio fréquence 23 est par exemple une interface utilisant une modulation à bande ultralarge de type UWB (de l'anglais Ultra Wide Band), par exemple comme définit dans le standard IEEE802.15.4. L'interface 25 est une interface utilisant le corps humain comme vecteur de signal également connu sous l'acronyme IBC (de l'anglais Intra Body Communication).

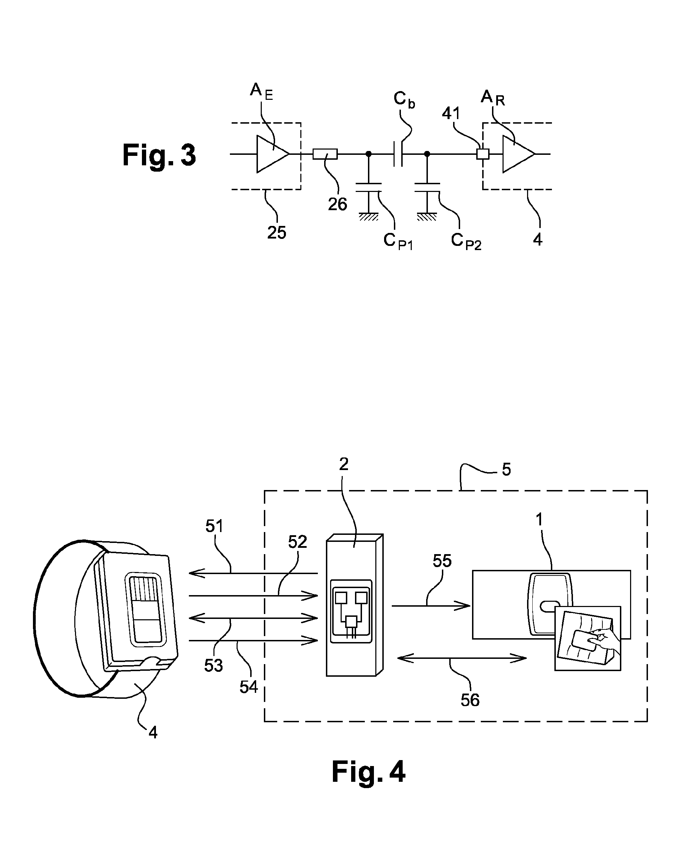

Les communications IBC se base sur le principe qu'une modulation de champ électrique permet de transporter un signal sur la peau humaine par une technique dite de couplage capacitif, le corps humain se comportant comme un condensateur. Comme illustré sur la figure 3, l'interface 25 module un signal électrique sur l'électrode 26, ce champ électrique est transmis à la peau par un contact. Le dispositif personnel d'authentification 4 peut détecter le signal modulé en le récupérant sur une deuxième électrode 41 en contact permanent avec la peau de l'utilisateur. L'interface 25 comporte en sortie un amplificateur A_{E} destiné à fournir un champ électrique sur l'électrode 26. L'électrode 41 est reliée à l'entrée d'un amplificateur A_{R} situé dans le dispositif d'authentification. Les électrodes 26 et 41 sont reliées entre elles par la capacité de liaison C_{b} correspond à la capacité équivalente du corps humain en contact avec les électrodes 26 et 41. Par ailleurs, ces deux électrodes sont aussi reliées à la masse par des capacités parasites Cₚ₁ et Cₚ₂. La transmission du signal se fait donc par l'intermédiaire du pont capacitif constitué des capacités C_{b}, Cₚ₁ et Cₚ₂. Afin d'éviter d'avoir une saturation parasite de l'amplificateur A_{R}, il convient d'avoir une bande passante limitée à la bande de fréquence utilisé pour transmettre le signal modulé.

Revenant à la figure 2, un microcontrôleur 27 sert d'unité de traitement et de mémorisation pour le dispositif de traduction 2. Le microcontrôleur 27 est couplé aux interfaces 22, 23 et 25 afin d'en assurer le contrôle ainsi que pour effectuer les transferts de données appropriés. En outre, le dispositif de traduction est destiné à être rendu solidaire de l'appareil de contrôle 1. Le microcontrôleur dispose donc d'un programme dédié permettant, d'une part, d'identifier le service proposé par l'appareil de contrôle 1 pour le dispositif personnel d'authentification 4 et, d'autre part, d'émuler un dispositif sans contact venant s'authentifier auprès de l'appareil de contrôle. Dans un souci de sécurisation, le dispositif de traduction 2 doit être rendu solidaire de l'appareil de contrôle 1.

Selon un premier mode de réalisation, le dispositif de traduction 2 est placé à l'intérieur du boitier de l'appareil de contrôle 1. Il convient alors de faire coïncider l'antenne 21 avec l'antenne de l'appareil de contrôle 1 afin d'assurer un couplage maximal. Le conducteur 26 devra être relié à une plaque conductrice accessible à l'utilisateur 3. Le bâti de l'appareil de contrôle 1 peut faire office de plaque relié au conducteur 26.

Selon un deuxième mode de réalisation, le dispositif de traduction 2 est placé par-dessus l'appareil de contrôle 1 au niveau de son antenne pour coupler celle-ci avec l'antenne 21. Le dispositif de traduction doit être fixé de manière à rendre son démontage très difficile, par exemple en utilisant un verrouillage utilisant une serrure. Lae conducteur 26 peut être relié à une plaque situé juste à côté de l'antenne 21.

Pour le fonctionnement de l'appareil de traduction 2, il convient de se référer à la figure 4. Le pointillé 5 représente l'ensemble formé par l'appareil de contrôle 1 muni du dispositif de traduction 2. L'utilisateur 3 d'un dispositif personnel d'authentification 4 va toucher le conducteur 26 déclenchant ainsi une première communication 51 à travers sont corps. Cette première communication 51 transfert du dispositif de traduction vers le dispositif personnel 4 des informations de connexion, par exemple les paramètres de connexion à utiliser pour l'interface radiofréquence 23 et éventuellement une clef publique destinée à envoyer des informations cryptées.

A réception des paramètres de connexion, le microcontrôleur 27 paramètre l'interface radiofréquence 23 et renvoi un message 52 via l'interface 23, contenant par exemple la clef publique du dispositif personnel 4 pour ouvrir un canal sécurisé avec le dispositif de traduction 2. Le canal sécurisé étant ouvert, une authentification mutuelle 53 est réalisée pour permettre d'identifier le service correspondant au dispositif de traduction. Puis, si le dispositif personnel 4 identifie qu'il s'agit d'un service pour lequel il contient des données d'identification, alors le dispositif personnel envoie un message 54, toujours par l'intermédiaire du canal sécurisé, contenant les informations correspondant à l'utilisateur qui sont propre au service associé à l'appareil de contrôle 1.

Les données d'authentification auprès de l'appareil 1 étant reçu, le dispositif de traduction peut alors envoyer un message 55 à destination de l'appareil de contrôle via l'interface 22. Il s'en suit l'exécution d'une transaction 56 visant à émuler un dispositif sans contact venant interagir avec l'appareil de contrôle en utilisant les informations d'authentification transmises préalablement par le dispositif personnel. La transaction 56 étant terminée, le dispositif de traduction peut ensuite effacer les informations qui viennent d'être utilisées.

A titre de variante les données transférées dans le dispositif de traduction 2 peuvent être effacées systématiquement au bout d'un temps prédéterminé, par exemple une seconde.

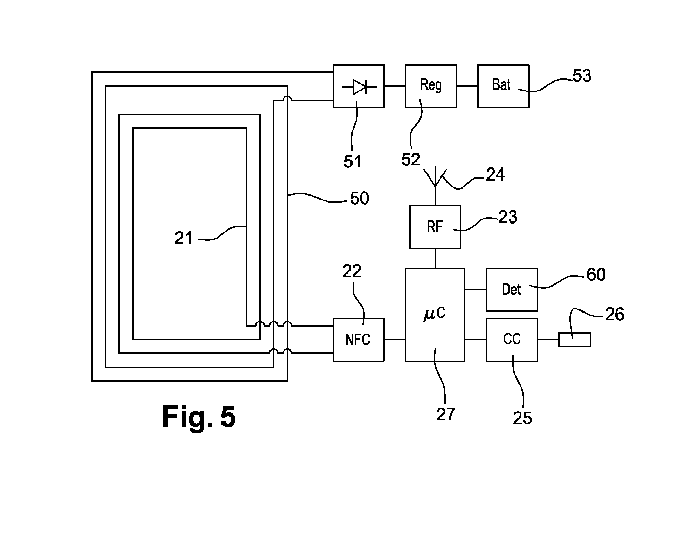

En référence à la figure 5, deux autres variantes vont être détaillées. Chacune de ces variantes peut-être utilisées indépendamment l'une de l'autre bien qu'elles soient décrites sur le même schéma et qu'il existe un effet de synergie lorsqu'elles sont utilisées simultanément. Ces deux variantes visent à réguler et diminuer la récupération d'énergie à partir du champ de l'appareil de contrôle 1.

Afin d'étaler dans le temps la capture d'énergie sur le champ de l'appareil de contrôle 1 et de réduire la perturbation lors de la modulation d'information, il est ici proposé d'avoir recours à un circuit d'alimentation auxiliaire indépendant de la communication NFC. Le circuit d'alimentation auxiliaire comporte une antenne supplémentaire 50 connectée à un pont redresseur 51 suivi d'un régulateur 52 permettant de recharger une batterie 53 qui sert de source d'alimentation pour le dispositif de traduction 2. L'antenne supplémentaire 50 permet de capter le champ indépendamment de la première antenne 21, ce qui réduit les perturbations sur la première antenne et permet en outre de recharger la batterie 53 sans nécessairement alimenter le microcontrôleur 27 et les interfaces 22, 23 et 25. Cela permet de **capter également plus d'énergie tout en étalant dans le temps** le rechargement de la batterie 53.

Les lecteurs ISO14443 ayant un faible rayonnement lorsqu'aucun dispositif n'est détecté dans le champ, la recharge de la batterie s'effectue dans les périodes où le lecteur de l'appareil de contrôle est sollicité. En outre il est aussi possible de leurrer le lecteur si l'on désire une recharge plus rapide de la batterie.

Afin de mieux contrôler la mise en veille et le réveil du microcontrôleur 27, il est préférable d'avoir recours à un détecteur de présence 60 distinct de l'interface 25 et ayant une très faible consommation. En effet, un simple détecteur de présence 60 peut être consommateur d'énergie uniquement en cas de détection et il permet de couper l'alimentation de toutes les interfaces 22, 23 et 25. Ainsi, à l'issue d'une transaction le microcontrôleur 27 peut couper l'alimentation de toutes ses interfaces à l'exception du détecteur de présence 60 et enfin couper son horloge de cadencement. Si le détecteur de présence détecte une présence, un signal d'interruption est envoyé au microcontrôleur qui remet son horloge en route et peut alors réalimenter ses interfaces.

Le circuit de recharge de batterie est bien entendu indépendant de la mise en veille. Par contre la mise en veille permet de recharger plus efficacement la batterie 53.

## Revendications

1. Dispositif de transposition de communication qui comporte:
- une première interface (25) de communication de type à couplage capacitif, cette première interface permettant de réaliser une première **communication pour** échanger avec un dispositif utilisateur une information confidentielle ;
- une deuxième interface (23) de **communication de type** radiofréquence, cette deuxième interface permettant d'établir une liaison de type radio fréquence cryptée avec le dispositif utilisateur en utilisant l'information confidentielle ;
- une unité de traitement et de mémorisation (27) permettant de **transférer** via **la deuxième interface des informations** d'authentification contenues dans le dispositif utilisateur et destinées à un appareil de contrôle;
- une troisième interface (22) de communication de type sans **contact utilisant un champ électromagnétique fourni** par un **appareil de contrôle pour communiquer les informations** d'authentification préalablement reçues du dispositif utilisateur.

2. Dispositif selon la revendication 1, dans lequel l'unité de traitement et **de mémorisation efface systématiquement les informations** d'authentification après les avoir transmises via la troisième interface.

3. Dispositif selon la revendication 1, ledit dispositif étant intégré dans un appareil de contrôle.

4. Dispositif selon la revendication 1, dans lequel la première interface établit une communication utilisant le corps humain comme conducteur.

5. Dispositif selon la revendication 1, dans lequel la deuxième interface est une interface de type radio fréquence à courte portée utilisant une modulation à large bande.

6. Dispositif selon la revendication 1, dans lequel la troisième interface est conforme au standard ISO14443.

7. Dispositif selon la revendication 1, dans lequel le dispositif comporte un circuit d'alimentation qui permet de récupérer de l'énergie à partir du champ électromagnétique afin de recharger une batterie qui sert à alimenter les première à troisième interfaces de communication et l'unité de traitement et de mémorisation.

8. Procédé d'authentification entre un dispositif utilisateur utilisant une première communication par couplage capacitif pour lancer une communication radiofréquence cryptée et un appareil de **contrôle d'accès de type sans contact utilisant un champ** électromagnétique modulé, **caractérisé en ce que** l'on utilise un dispositif de traduction comportant une première interface de communication de type à couplage capacitif, une deuxième interface de communication de type radiofréquence, une troisième interface de communication de type sans contact utilisant le champ électromagnétique fournit par l'appareil de contrôle, et une unité de traitement et de mémorisation, et **en ce que** le procédé comporte les étapes suivantes:
- réalisation d'une première communication (51) pour échanger une information confidentielle entre le dispositif utilisateur et le dispositif de traduction;
- établissement d'une liaison de type radio fréquence cryptée (52, 53) entre le dispositif utilisateur et le dispositif de traduction en utilisant l'information confidentielle ;
- transfert (54) **via la deuxième interface des informations** d'authentification contenues dans le dispositif utilisateur et destinées à un appareil de contrôle vers le dispositif de traduction ;
- à l'issue du transfert des informations d'authentification dans le dispositif de traduction, établissement d'une communication (55) sans contact entre le dispositif traducteur et l'appareil de contrôle et exécution d'une session (56) en utilisant les informations d'authentification préalablement reçues du dispositif utilisateur.

9. Procédé selon la revendication 8, dans lequel l'unité de traitement et de mémorisation du dispositif de traduction efface toutes les informations après les avoir transférées à l'appareil de contrôle.

10. Procédé selon la revendication 8, dans lequel le dispositif de traduction récupère une partie de l'énergie du champ électromagnétique fournit par l'appareil de contrôle pour s'alimenter.
